# EUROPÄISCHE PATENTSCHRIFT

(11) **EP 0 761 598 B1**
(45) Veröffentlichungstag und Bekanntmachung des Hinweises auf die Patenterteilung: **14.07.1999**
(21) Anmeldenummer: 96112913.7
(22) Anmeldetag: 10.08.1996
(51) Int. Cl.: C01B 39/02

(54) **Verfahren zur Herstellung von Zeolith Y**
Process for the preparation of zeolithe Y
Procédé de préparation de zéolithe Y

(30) Priorität: 02.09.1995 DE 19532500
(43) Veröffentlichungstag der Anmeldung: 12.03.1997
(73) Patentinhaber: Degussa-Hüls Aktiengesellschaft, 45764 Marl (DE)
(72) Erfinder: Eckehart, Roland, Dr., 63486 Bruchköbel (DE); Wolfgang, Lutz, Dr., 10179 Berlin (DE)

(56) Entgegenhaltungen:
- EP-A- 0 072 397
- EP-A- 0 095 305
- WO-A-88/03437
- ZEOLITES, Bd. 8, 1988, Seiten 458-463, XP000196645 G. J. RAY ET AL: "CHARACTERIZATION OF DEFECTS IN DEALUMINATED FAUJASITE"

## Beschreibung

Die Erfindung betrifft ein Verfahren zur Herstellung von Zeolith Y.

Es ist bekannt, daß dealuminierte Y-Zeolithe mit einem Verhältnis SiO₂/Al₂O₃ > 100, die aus NaY-Zeolith durch Behandlung mit Siliciumtetrachlorid erhalten wurden (DAY-S), im Vergleich zu aluminiumarmen Y-Zeolithen, die auf anderen Wegen erhalten wurden, den Vorteil aufweisen, daß ihr Mikroporensystem weitgehend intakt ist. Damit besitzen solche Materialien hinsichtlich ihres Mikroporenvolumens und ihrer Selektivität besonders günstige Eigenschaften für die Adsorptionstechnik (J. A. Martens, P. J. Grobet, P. A. Jacobs, Preparation of Catalysts V (Stud. Surf. Sci. Catal. 63), Elsevier, Amsterdam 1991, S. 355; WO 88/03437).

Y-Zeolithe DAY-S mit hohen SiO₂/Al₂O₃Verhältnissen des Gerüsts, insbesondere solche mit > 100, sind unter drastischen hydrothermalen Bedingungen, wie sie beispielsweise bei der Regenerierung unter Benutzung von Wasserdampf in einigen adsorptiven und katalytischen Verfahren auftreten können, nur bedingt stabil. Außerdem lösen sie sich in wäßrigen alkalischen Systemen unter deutlichen Kristallinitätsverlusten auf. Deshalb wurden Maßnahmen entwickelt, um die Widerstandsfähigkeit solcher Zeolithe gegenüber Wasserdampf und wäßrigen alkalischen Medien nachträglich zu steigern. So führt beispielsweise der Aufbau einer Alumosilikatschicht auf die Kristalle durch Umsetzung der Zeolithe mit einer Natriumaluminatlösung von siliciumreichen Y-Zeolithen zu einem Schutz gegenüber Wasserdampf (DD 296 899 und DE 42 07 815).

Die beschriebene Maßnahme hat den Nachteil, daß die Behandlung sehr siliciumreicher Y-Zeolithe aufgrund des pH-Wertes von Natriumaluminatlösungen, der im alkalischen Bereich liegt, bei unvorsichtigem Vorgehen eine Schädigung der Gerüststruktur hervorrufen kann.

Es ist bekannt, mit SiCl₄ sehr weitgehend dealuminierte Zeolithe Y (Aluminiumgehalt ≦ 1.36 %) mit Wasserdampf nachzubehandeln. Hierdurch wird amorphes Siliciumdioxid entweder wieder in das Zeolithgerüst eingebaut oder aber in kristallines Quarz umgewandelt (vgl. G. J. Ray et al., ZEOLITES (1988), Vol. 8, Seite 458 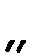 Characterization of defects in dealuminated faujasite").

Es bestand die Aufgabe, ein Verfahren zu finden, mit dem Y-Zeolithe mit SiO₂/Al₂O₃-Verhältnissen ihres Gerüsts von > 100 hergestellt werden können, die eine hohe hydrothermale Stabilität und Widerstandsfähigkeit gegenüber alkalischen Lösungen aufweisen.

Gegenstand der Erfindung ist ein Verfahren zur Herstellung Verfahren zur Herstellung von Y-Zeolithen mit einem SiO₂/Al₂O₃- Verhältnis des Gerüstes von > 100 durch Dealuminierung und Wasserdampfbehandlung, welches dadurch gekennzeichnet ist, daß man einen NaY-Zeolith durch Behandlung mit SiCl₄ zu einem Y-Zeolith soweit dealuminiert, daß das SiO₂/Al₂O₃-Verhältnis im Bereich von 8 bis 50 liegt, und dieser teilweise dealuminierte Zeolith einer Wasserdampfbehandlung im Temperaturbereich von 500 bis 1000 °C unterworfen wird bis zur Ausbildung einer gesteigerten hydrothermalen Stabilität und Widerstandsfähigkeit gegenüber wäßrigen alkalischen Medien. Bei diesem Vorgehen entstehen Y-Zeolithe DAY-ST, die ein SiO₂/Al₂O₃-Verhältnis ihres Gerüsts von > 100 aufweisen und überraschenderweise durch eine gesteigerte hydrothermale Stabilität und eine verbesserte Widerstandsfähigkeit gegenüber wäßrigen alkalischen Medien charakterisiert sind.

Dabei ist es nicht erforderlich, daß sich das SiO₂/Al₂O₃-Verhältnis der primär durch Behandlung von NaY-Zeolith mit Siliciumtetrachlorid gewonnenen, nur gering dealuminierten Y-Zeolithen ausschließlich auf die Zusammensetzung des

Zeolith-Gerüsts bezieht. Vielmehr handelt es sich an dieser Stelle um das durch chemische Analyse erhaltene Verhältnis. Dies bedeutet, daß dieser Zeolith auch Nicht-Gerüst-Aluminium enthalten kann.

Die Wasserdampf-Atmosphäre kann durch Zuführen von Wasserdampf eingestellt werden. Sie kann aber auch dadurch erzeugt werden, daß man einen noch feuchten Zeolith auf Temperaturen oberhalb von 500 °C erhitzt. Der Wasserdampfpartialdruck bei der jeweiligen Temperatur kann zwischen 0.1 und 1 betragen. Den Wasserdampfpartialdruck kann man durch Erhitzen des feuchten Zeolithen auf Temperaturen oberhalb 500 °C einstellen.

Die erfindungsgemäß hergestellten Zeolithe DAY-ST weisen die Vorteile der Zeolithe DAY-S auf, besitzen im Vergleich zu diesen aber eine erhöhte Stabilität unter hydrothermalen Bedingungen und gegenüber wäßrigen alkalischen Medien. Ihr durch Stickstoffadsorption bei 77 K nach dem t-plot-Verfahren ermitteltes Mikroporenvolumen beträgt zwischen 0.22 und 0.25 ml/g.

Die hydrothermale Stabilität der Zeolithe DAY-ST wird dadurch getestet, daß eine Suspension von 1 Teil Zeolith in 40 Teilen Wasser 80 h lang in einem Autoklaven unter autogenem Druck auf 160 °C erhitzt wird. Danach wird ihre N₂-Sorptionskapazität bei 77 K bestimmt.

Die Stabilität in wäßriger alkalischen Systemen wird dadurch überprüft, daß man 1 g Zeolith in 100 ml einer 0.01 molaren NaOH-Lösung während 20 Minuten rührt und danach den Anteil an gelöstem SiO₂ in der wäßrigen Phase ermittelt.

Die nach dem erfindungsgemäßen Verfahren hergestellten Zeolithe DAY-ST können als Katalysatoren und Adsorbenzien eingesetzt werden.

### Beispiel 1

### 1. Stufe: Herstellung eines Y-Zeolithen mit einem SiO₂/Al₂O₃-Verhältnis von 15,2 durch Behandlung von NaY-Zeolith mit Siliciumtetrachlorid

300 g calcinierter NaY-Zeolith (SiO₂/Al₂O₃ = 5.1; Glühverlust bei 1000 °C: 1.5 Gew.-%) werden in einem horizontal angeordneten Stahlrohr (Innendurchmesser: 10 cm, Länge der Reaktionszone: 80 cm) unter Stickstoff (10 l/h) innerhalb von 1.5 h auf 410 °C erhitzt. Nach weiteren 15 min werden bei dieser Temperatur 120 g SiCl₄, die in einem Verdampfer (100 °C) in den gasförmigen Zustand überführt werden, während 42 min über den Zeolith geleitet. Danach läßt man den Zeolith innerhalb von 2 h im Inertgasstrom abkühlen. Das Produkt wird in 3.0 l 0.1 M HCl aufgeschlämmt und 1 h auf 80 °C erhitzt. Danach wird mit einem Büchnertrichter filtriert und so lange mit destilliertem Wasser gewaschen bis in dem Filtrat mit AgNO₃ keine Chlorid-Ionen mehr nachweisbar sind. Anschließend wird der Zeolith 16 h im Trockenschrank bei 120 °C getrocknet. Das Produkt weist ein durch chemische Analyse ermitteltes SiO₂/Al₂O₃-Verhältnis von 15.2 auf. Das durch Stickstoff-Adsorption bei 77 K nach dem t-plot-Verfahren bestimmte Mikroporenvolumen beträgt 0.25 ml/g.

### 2. Stufe: Behandlung des Produkts der 1. Stufe mit Wasserdampf zur Herstellung von DAY-ST

10.0 g des Produkts aus Stufe 1 werden 3 h bei 700 °C in einem Drehrohrofen (Druchmesser: 7 cm) in einer Wasserdampf-Atomosphäre getempert. Die Wasserdampf-Atmosphäre wird hergestellt, indem 0.35 l Wasser pro Stunde verdampft und in den Drehrohrofen eingespeist werden.

Im IR-Spektrum sind danach Valenzschwingungen bei 1078 und 836 cm⁻¹ zu detektierbar. Aus der Lage der Banden ergibt sich ein SiO₂/Al₂O₃-Verhältnis des Gerüsts von 300 nach H. Fichtner-Schmittler, U. Lohse, H. Miessner, H. E. Maneck, Z. phys. Chem. Leipzig 271 (1990) 69. Das durch Stickstoff-Adsorption bei 77 K nach dem t-plot-Verfahren bestimmbare Mikroporenvolumen beträgt 0.24 ml/g.

### Überprüfung der Stabilität des Produkts aus Stufe 2 (DAY-ST) gegenüber Wasserdampf und wäßrigen alkalischen Lösungen

Eine Suspension von 1.0 g des Produkts (Trockensubstanz; unter Berücksichtigung des Glühverlustes nach 1 h bei 1000 °C) aus der zweiten Stufe in 40 ml destilliertem Wasser wird 80 h lang in einem 60 ml-Autoklaven auf 160 °C erhitzt. Nach dem Abkühlen wird der Zeolith filtriert und 12 h bei 120 °C getrocknet. Die 10 h bei 400 °C ausgeheizte Probe nimmt bei 77 K und p/p₀ = 0.5 139 ml/g (Stickstoff unter Normalbedingungen) auf.

Zur Überprüfung der Stabilität in alkalischen Lösungen werden 1.0 g (Trockensubstanz, unter Berücksichtigung des Glühverlusts nach 1 h bei 100 °C) aus der zweiten Stufe in 100 ml 0.01 M Natronlauge 20 Minuten lang gerührt. Danach wird filtriert. Der SiO₂-Gehalt des Filtrats beträgt 8 mg/100 ml.

### Beispiel 2 (Vergleichsbeispiel):

### Synthese eines Y-Zeolithen mit einem SiO₂/Al₂O₃-Verhältnis des Gerüsts von ca. 150 durch Behandlung von NaY-Zeolith mit Silicillmtetrachlorid (DAY-S)

300 g calcinierter NaY-Zeolith (SiO₂/Al₂O₃ = 5.1; Glühverlust bei 1000 °C: 1.5 Gew.-%) werden in einem horizontal angeordneten Stahlrohr (Innendurchmesser: 10 cm. Länge der Reaktionszone: 80 cm) unter Stickstoff (10 l/h) innerhalb von 1.5 h auf 450 °C erhitzt. Nach weiteren 15 min werden bei dieser Temperatur 360 g SiCl₄, die in einem Verdampfer (100 °C) in den gasförmigen Zustand überführt werden, während 60 min über den Zeolith geleitet. Danach läßt man den Zeolith innerhalb von 2 h im Inertgasstrom abkühlen. Das Produkt wird in 5.0 l 1 M HCl aufgeschlämmt. Diese Suspension wird 2 h unter Rückfluß erhitzt. Danach wird mit einem Büchnertrichter filtriert und solange mit destilliertem Wasser gewaschen bis im Filtrat mit AgNO₃ keine Chlorid-Ionen mehr nachweisbar sind. Anschließend wird der Zeolith 16 h im Trockenschrank bei 120 °C getrocknet. Das Produkt weist ein SiO₂/Al₂O₃-Verhältnis von ca. 300 auf. Das durch Stickstoff-Adsorption bei 77 K nach dem t-plot-Verfahren bestimmte Mikroporenvolumen beträgt 0.27 ml/g.

### Überprüfung der Stabilität des erhaltenen Produkts DAY-S gegenüber Wasserdampf und wäßrigen alkalischen Lösungen

Eine Suspension von 1.0 g des erhaltenen Zeolithen (Trockensubstanz; unter Berücksichtigung des Glühverlustes nach 1 h bei 1000 °C) in 40 ml destilliertem Wasser wird 80 h lang in einem 60 ml-Autoklaven auf 160 °C erhitzt. Nach dem Abkühlen wird der Zeolith filtriert und 12 h bei 120 °C getrocknet. Die 10 h bei 400 °C ausgeheizte Probe nimmt bei 77 K und p/p₀ = 0.5 nur 35 ml/g (Stickstoff unter Normalbedingungen) auf. Dieser Zeolith weist im Vergleich zu dem Material aus Beispiel 1 ein weitaus geringeres Porenvolumen nach der hydrothermalen Beanspruchung auf.

Zur Überprüfung der Stabilität in alkalischen Lösungen werden 1.0 g (Trockensubstanz, unter Berücksichtigung des Glühverlustes nach 1 h bei 1000 °C) aus der zweiten Stufe in 100 ml 0.01 m Natronlauge 20 Minuten lang gerührt. Danach wird filtriert. Der SiO₂-Gehalt des Filtrats beträgt 42 mg/100 ml und belegt die weitgehendere Auflösung des Zeolithen im Vergleich zum Material aus Beispiel 1.

## Patentansprüche

1. Verfahren zur Herstellung von Y-Zeolithen mit einem SiO₂/Al₂O₃- Verhältnis des Gerüstes von > 100 durch Dealuminierung und Wasserdampfbehandlung, dadurch gekennzeichnet, daß man einen NaY-Zeolith durch Behandlung mit SiCl₄ zu einem Y-Zeolith soweit dealuminiert, daß das SiO₂/Al₂O₃-Verhältnis im Bereich von 8 bis 50 liegt, und dieser teilweise dealuminierte Zeolith einer Wasserdampfbehandlung im Temperaturbereich von 500 bis 1000 °C unterworfen wird bis zur Ausbildung einer gesteigerten hydrothermalen Stabilität und Widerstandsfähigkeit gegenüber wäßrigen alkalischen Medien.

2. Verfahren nach Anspruch 1, dadurch gekennzeichnet, daß der Wasserdampf-Partialdruck im Bereich von 0,1 bis 1 liegt.

3. Verfahren nach Anspruch 1, dadurch gekennzeichnet, daß der NaY-Zeolith durch Behandlung mit SiCl₄ zu einem Zeolith soweit dealuminert wird, daß das SiO₂/Al₂O₃-Verhältnis im Bereich von 8 bis 30 liegt.

4. Verfahren nach Anspruch 1, dadurch gekennzeichnet, daß der Wasserdampf-Partialdruck durch Erhitzen des feuchten Zeoliths auf Temperaturen im Bereich von 500 bis 1000 °C eingestellt wird.

5. Verfahren nach Anspruch 1, dadurch gekennzeichnet, daß die Dealuminierung im Bereich des SiO₂/Al₂O₃-Verhältnisses von 8 bis 50 so geführt wird, daß die gesteigerte hydrothermale Stabilität und Widerstandsfähigkeit gegen wäßrige alkalische Medien mit einem Mikroporenvolumen im Bereich von 0,22 bis 0,25 mℓ/g einhergeht.

## Claims

1. Process for the preparation of Y zeolites having a skeleton with an SiO₂/Al₂O₃ ratio of > 100, by dealuminisation and steam treatment, characterised in that an NaY zeolite is dealuminised by treatment with SiCl₄ to a Y zeolite to the extent that the SiO₂/Al₂O₃ ratio is in the range of 8 to 50, and this partially dealuminised zeolite is subjected to a steam treatment in the temperature range of 500°C to 1000°C until an increased hydrothermal stability and resistance to aqueous alkaline media have developed.

2. Process according to claim 1, characterised in that the partial pressure of the steam is in the range of from 0.1 to 1.

3. Process according to claim 1, characterised in that the NaY zeolite is dealuminised by treatment with SiCl₄ to a zeolite to the extent that the SiO₂/Al₂O₃ ratio is in the range of 8 to 30.

4. Process according to claim 1, characterised in that the partial pressure of the steam is established by heating the moist zeolite to temperatures in the range of 500°C to 1000°C.

5. Process according to claim 1, characterised in that the dealuminisation in the range of the SiO₂/Al₂O₃ ratio of 8 to 50 is carried out in such a way that the increased thermal stability and resistance to aqueous alkaline media is accompanied by a micropore volume in the range of from 0.22 to 0.25 ml/g.

## Revendications

1. Procédé pour la préparation de zéolithes Y, dont la structure présente un rapport SiO₂/Al₂O₃ supérieur à 100, par désalumination et traitement à la vapeur d'eau, caractérisé en ce qu'on désalumine une zéolithe NaY par traitement avec du SiCL₄ en une zéolithe Y jusqu'à ce que le rapport SiO₂/Al₂O₃ soit situé dans une plage comprise entre 8 et 50, puis en ce qu'on soumet cette zéolithe partiellement déaluminisée à un traitement à la vapeur d'eau dans une plage de température comprise entre 500 et 1000 °C jusqu'à obtention d'une meilleure stabilité hydrothermique et une meilleure résistance aux milieux aqueux alcalins.

2. Procédé selon la revendication 1, caractérisé en ce que la pression partielle de la vapeur d'eau est comprise dans la plage allant de 0,1 à 1.

3. Procédé selon la revendication 1, caractérisé en ce que la zéolithe NaY est désaluminisée par traitement avec du SiCl₄ en une zéolithe jusqu'à ce que le rapport SiO₂/Al₂O₃ soit compris dans une plage allant de 8 à 30.

4. Procédé selon la revendication 1, caractérisé en ce que la pression partielle de la vapeur d'eau est réglée en chauffant la zéolithe humide à des températures comprises dans une plage allant de 500 à 1000 °C.

5. Procédé selon la revendication 1, caractérisé en ce que la désaluminisation dans la plage des rapports SiO₂/Al₂O₃ de 8 à 50 est conduite de telle manière que la meilleure stabilité hydrothermique et la meilleure résistance aux milieux aqueux alcalins se développe avec un volume de micropores dans la plage allant de 0,22 à 0,25 ml/g.
